# EUROPÄISCHE PATENTSCHRIFT

(11) **EP 2 997 339 B1**
(45) Veröffentlichungstag und Bekanntmachung des Hinweises auf die Patenterteilung: **12.09.2018**
(21) Anmeldenummer: 14765937.9
(22) Anmeldetag: 12.09.2014
(51) Int. Cl.: G01K 7/16, G01K 1/16

(54) **ANORDNUNG EINES SENSORS ZUR MESSUNG DER TEMPERATUR EINES MEDIUMS IN EINEM KRAFTFAHRZEUG**
ARRANGEMENT OF A SENSOR FOR MEASURING THE TEMPERATURE OF A MEDIUM IN A MOTOR VEHICLE
ENSEMBLE CAPTEUR POUR LA MESURE DE LA TEMPÉRATURE D'UNE SUBSTANCE DANS UN VÉHICULE À MOTEUR

(30) Priorität: 23.09.2013 DE 102013219091
(43) Veröffentlichungstag der Anmeldung: 23.03.2016
(73) Patentinhaber: Conti Temic microelectronic GmbH, 90411 Nürnberg (DE)
(72) Erfinder: KEUTEN, Matthias, 90518 Altdorf (DE); VÖGERL, Andreas, 92331 Parsberg (DE); HENNIGER, Jürgen, 91056 Erlangen-Dechsendorf (DE); GÜNTHER, Daniel, 90766 Fürth (DE); WIECZOREK, Matthias, 91233 Neunkirchen am Sand (DE); WITTMANN, Lisa-Maria, 91793 Alesheim (DE)
(74) Vertreter: Bonn, Roman Klemens
(86) Internationale Anmeldenummer: PCT/EP2014/069514
(87) Internationale Veröffentlichungsnummer: WO 2015/039968

(56) Entgegenhaltungen:
- DE-A1- 3 044 419
- DE-A1- 4 108 789
- DE-A1- 4 237 224
- DE-A1- 4 339 631

## Beschreibung

Die Erfindung betrifft eine Anordnung eines Sensors nach dem Oberbegriff des Anspruchs 1.

Temperatursensoren, insbesondere zur Messung der Medientemperatur wie Öl oder Kühlflüssigkeit in einem Kraftfahrzeug, verändern in der Regel ihre elektrischen Eigenschaften in Abhängigkeit der vorherrschenden Temperatur. Zum Beispiel sinkt bei der Erwärmung eines Sensorbauteils aus Kohle oder einem Halbleitermaterial dessen elektrischer Widerstand. Durch die Widerstandsmessung im Bereich der großen Steigung lässt sich somit die Temperatur ziemlich genau ermitteln. Solche Werkstoffe leiten den Strom heiß besser als kalt, sie werden daher auch Heißleiter oder NTC (Negative Temperature Coefficient)-Widerstände genannt. Metalle wie zum Beispiel Platin zeigen den gegenteiligen Effekt und werden daher PTC (Positive Temperature Coefficient)-Widerstände genannt.

In der Regel wird der Sensorwiderstand, der vom Medium direkt umgeben ist, mit seinen beiden Anschlüssen, die als Pins oder Beinchen ausgeführt sein können, an eine Versorgungsspannung angelegt. Die an einem zum Sensorwiderstand parallel geschalteten Messwiderstand abfallende Spannung wird in einem Steuergerät ermittelt und ausgewertet.

Der Temperatureintrag vom Medium zum Sensor kann über die beiden Anschlussbeinchen und gleichzeitig über die Seitenflächen erfolgen. Dabei ist die die Temperatur übertragende Fläche groß, die Ansprechzeit des Messvorgangs daher kurz. Jedoch ist die Gefahr eines Kurzschlusses zwischen den Anschlussbeinchen insbesondere durch Späne, wie sie in einem Motor oder einem Getriebe durch Abrieb zwischen sich drehenden Teilen durchaus vorkommen, groß. Temperatursensoren aus dem Stand der Technik sind beispielsweise aus DE4108789 A1, DE4339631 A1, DE3044419 A1 und DE4237224 A1 bekannt.

Es ist daher eine Aufgabe der vorliegenden Erfindung, eine Anordnung eines Sensors zur Messung der Temperatur eines Mediums in einem Kraftfahrzeug der eingangs genannten Art derart zu schaffen, dass bei erhöhter Kurzschlusssicherheit eine möglichst kurze Ansprechzeit garantiert ist.

Diese Aufgabe ist erfindungsgemäß gelöst durch eine Anordnung mit den Merkmalen des Anspruchs 1.

Die erfindungsgemäße Anordnung des Sensors, wobei der erste Anschlussdraht und der größte Teil des Sensorkörpers mit dem Medium in direktem Kontakt steht, garantiert eine kurze Ansprechzeit, wodurch auch schnelle Temperaturänderungen erfasst werden können. Gleichzeitig wird die Gefahr eines Kurzschlusses zwischen den Anschlussdrähten, insbesondere durch Späne, wie sie in einem Motor oder einem Getriebe durch Abrieb zwischen sich drehenden Teilen durchaus vorkommen, erheblich reduziert, indem der zweite Anschlussdraht vom Medium vollständig isoliert ist. Das Sensorsignal kann an den so isoliert gehaltenen Anschlusskontakten abgegriffen und zur Auswertung einer Auswerteeinheit, insbesondere einem Steuergerät zugeführt werden.

Um die Gefahr eines Kurzschlusses zwischen den Anschlussdrähten noch weiter zu reduzieren, ist der Sensorkörper im Kontaktsockel, insbesondere in einer zur Aufnahme zumindest eines Teils des Sensorkörpers geeigneten Aussparung, teilweise mit einer elektrisch isolierenden Masse, wie zum Beispiel einem Epoxidharz oder Polyurethan, gegen das Medium dichtend umgeben. Vorteilhafterweise ist jeder Anschlussdraht über einen separaten Anschlusskontakt mit einem Kontaktsockel, an dem das Sensorsignal abgegriffen werden kann, elektrisch leitend verbunden. Der Anschlusskontakt kann je nach Anforderung bzw. je nach Ausführung des Kontaktsockels als Stanzgitter, als flexible Leiterfolie oder als sonstiger elektrischer Leiter, zum Beispiel als Draht, ausgeführt sein.

Um die Ansprechzeit des Messverfahrens weiter zu steigern, kann die mit dem Medium in Kontakt tretende Oberfläche der Anordnung vergrößert werden, indem zusätzlich ein Teil des Anschlusskontakts des ersten Anschlussdrahtes aus dem Kontaktsockel herausragt und einen zusätzlichen Temperatureintrag liefert.

Je nach Einsatzgebiet kann der Sensor als NTC (Negative Temperature Coefficient)-Widerstand, zum Beispiel aus Kohle oder einem Halbleitermaterial, mit einem negativen Temperaturkoeffizienten, oder als PTC (Positive Temperature Coefficient)-Widerstand, insbesondere aus Metall, mit einem positiven Temperaturkoeffizienten ausgeführt sein.

Weitere Merkmale, Vorteile und Einzelheiten der Erfindung sind der nachfolgenden Beschreibung entnehmbar, in der ein bevorzugtes Ausführungsbeispiel anhand der einzigen Zeichnung näher erläutert wird.

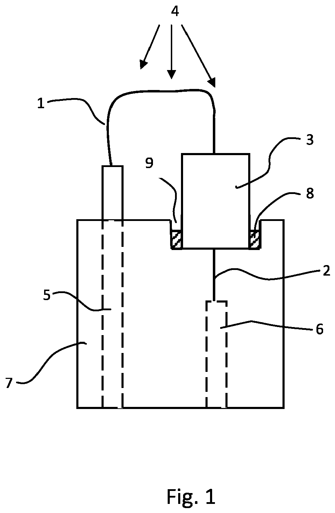

Fig. 1 zeigt Anordnung eines Sensors zur Messung der Temperatur eines Mediums 4 in einem Kraftfahrzeug, wobei der Sensor einen Sensorkörper 3 und zwei Anschlussdrähte 1, 2 umfasst. Der erste Anschlussdraht 1 und der größte Teil des Sensorkörpers 3 steht mit dem Medium 4, dessen Temperatur ermittelt werden soll, in direktem Kontakt.

Jeder Anschlussdraht 1, 2 ist über einen separaten Anschlusskontakt 5, 6 mit einem Kontaktsockel 7 elektrisch leitend verbunden, wobei der zweite Anschlussdraht 2 und der zugehörige Anschlusskontakt 6 vollständig vom Kontaksockel 7 umgeben sind, und dadurch vom Medium 4 sowohl thermisch als auch elektrisch isoliert sind. Am Kontaktsockel 7 ist ein Sensorsignal abgreifbar.

Durch diese Anordnung ist die Gefahr eines Kurzschlusses zwischen den Anschlussdrähten 1, 2 bzw. zwischen den Anschlusskontakten 5, 6 insbesondere durch Späne, wie sie in einem Motor oder einem Getriebe durch Abrieb zwischen sich drehenden Teilen durchaus vorkommen können, sehr gering gehalten.

Gleichzeitig ist die Temperatur übertragende Fläche der Anordnung groß, da der erste Anschlussdraht 1, der größte Teil des Sensorkörpers 3 und zumindest ein Teil des zum ersten Anschlussdrahtes 1 gehörigen Anschlusskontaktes 5 direkt mit dem Medium in Berührung kommt. Dadurch ist die Ansprechzeit des Messvorgangs klein und es können auch schnelle Temperaturschwankungen des Mediums erfasst werden.

Durch diese Anordnung, insbesondere der Anordnung des ersten Anschlussdrahtes 1, kann die Temperatur des Mediums 4 auch in sonst für den Sensorkörper 3 schwer zugänglichen Bereichen ermittelt werden, indem der erste Anschlussdraht 1 entsprechend geformt wird.

In Fig. 1 ist der Sensorkörper 3 in einer Aussparung 9 des Kontaktsockels 7 angeordnet und teilweise mit einer elektrisch isolierenden Masse 8 wie Epoxidharz oder Polyurethan gegen das Medium 4 dichtend umgeben. Dies führt zum einen zu einer Erhöhung der Kurzschlussfestigkeit, zum andern ist der Sensorkörper 3 schwingungsdämpfend in der Aussparung 9 fixiert.

## Patentansprüche

1. Anordnung eines Sensors zur Messung der Temperatur eines Mediums (4) in einem Kraftfahrzeug, wobei der Sensor einen Sensorkörper (3) und zwei Anschlussdrähte (1, 2) umfasst, **dadurch gekennzeichnet, dass**
der erste Anschlussdraht (1) und der größte Teil des Sensorkörpers (3) mit
dem Medium (4) in direktem Kontakt steht und der zweite Anschlussdraht (2) vom Medium (4) vollständig isoliert ist, und
der Sensorkörper (3) in einer Aussparung (9) des Kontaktsockels (7) teilweise mit einer elektrisch isolierenden Masse (8) gegen das Medium (4) dichtend umgeben ist.

2. Anordnung eines Sensors nach Anspruch 1, **dadurch gekennzeichnet, dass** jeder Anschlussdraht (1, 2) über einen separaten Anschlusskontakt (5, 6) mit einem Kontaktsockel (7) elektrisch leitend verbunden ist, wobei am Kontaktsockel (7) ein Sensorsignal abgreifbar ist.

3. Anordnung eines Sensors nach Anspruch 2 , **dadurch gekennzeichnet, dass** die Anschlusskontakte (5, 6) als Stanzgitter, als flexible Leiterfolie oder als sonstige elektrische Leiter ausgeführt sind.

4. Anordnung eines Sensors nach einem nach einem der vorhergehenden Ansprüche , **dadurch gekennzeichnet, dass**
ein Teil des Anschlusskontakts (5) des ersten Anschlussdrahtes (1) mit dem Medium (4) in Kontakt ist.

5. Anordnung eines Sensors nach einem der vorhergehenden Ansprüche , **dadurch gekennzeichnet, dass**
der Sensor ein Widerstand mit einem negativen Temperaturkoeffizienten ist.

6. Anordnung eines Sensors nach einem der Ansprüche 1 bis 4, **dadurch gekennzeichnet, dass**
der Sensor ein Widerstand mit einem positiven Temperaturkoeffizienten ist.

## Claims

1. Arrangement of a sensor for measuring the temperature of a medium (4) in a motor vehicle, wherein the sensor comprises a sensor body (3) and two connecting wires (1, 2), **characterized in that**
the first connecting wire (1) and the major part of the sensor body (3) is in direct contact with the medium (4) and the second connecting wire (2) is completely insulated from the medium (4), and the sensor body (3) in a recess (9) of the contact holder (7) is surrounded in a sealing manner in part by an electrically insulating mass (8) to prevent contact with the medium (4).

2. Arrangement of a sensor according to Claim 1, **characterized in that** each connecting wire (1, 2) is connected in an electrically conductive manner by way of a separate connecting contact (5, 6) to a contact holder (7), wherein a sensor signal can be picked up at the contact holder (7).

3. Arrangement of a sensor according to Claim 2, **characterized in that** the connecting contacts (5, 6) are embodied as a stamped grid, as a flexible conductive foil or as any other electrical conductor.

4. Arrangement of a sensor according to any one of the preceding claims, **characterized in that**
a part of the connecting contact (5) of the first connecting wire (1) is in contact with the medium (4).

5. Arrangement of a sensor according to any one of the preceding claims, **characterized in that**
the sensor is a resistor having a negative temperature coefficient.

6. Arrangement of a sensor according to any one of Claims 1 to 4, **characterized in that**
The sensor is a resistor having a positive temperature coefficient.

## Revendications

1. Ensemble capteur pour la mesure de la température d'une substance (4) dans un véhicule automobile, dans lequel le capteur comprend un corps de capteur (3) et deux fils de connexion (1, 2),
**caractérisé en ce que** le premier fil de connexion (1) et la majeure partie du corps de capteur (3) se trouvent en contact direct avec la substance (4) et **en ce que** le second fil de connexion (2) est complètement isolé de la substance (4), et le corps de capteur (3) est partiellement entouré de manière étanche vis-à-vis de la substance (4) par une masse électriquement isolante (8) dans un évidement (9) ménagé dans la douille de contact (7).

2. Ensemble capteur selon la revendication 1,
**caractérisé en ce que** chaque fil de connexion (1, 2) est relié de manière électriquement conductrice à une douille de contact (7) par l'intermédiaire d'un contact de connexion (5, 6) séparé, dans lequel un signal de capteur peut être prélevé au niveau de la douille de contact (7).

3. Ensemble capteur selon la revendication 2,
**caractérisé en ce que** les contacts de connexion (5, 6) sont réalisés sous la forme d'une grille estampée, d'une feuille conductrice flexible ou d'autres conducteurs électriques.

4. Ensemble capteur selon l'une des revendications précédentes,
**caractérisé en ce qu'**une partie du contact de connexion (5) du premier fil de connexion (1) est en contact avec la substance (4) .

5. Ensemble capteur selon l'une des revendications précédentes,
**caractérisé en ce que** le capteur est une résistance ayant un coefficient de température négatif.

6. Ensemble capteur selon l'une des revendications 1 à 4, **caractérisé en ce que** le capteur est une résistance ayant un coefficient de température positif.
